# EUROPEAN PATENT APPLICATION

(11) **EP 1 530 278 A2**
(43) Date of publication of application: **11.05.2005**
(21) Application number: 04256780.0
(22) Date of filing: 03.11.2004
(51) Int. Cl.: H02K 1/24, H02K 19/02

(54) **Rotor for a switched reluctance electrical machine, and electrical machine including such a rotor**

(30) Priority: 06.11.2003 GB 0325972
(71) Applicant: Goodrich Control Systems Ltd, Solihull, West Midlands B90 4LA (GB)
(72) Inventor: Batchelor, Stephen, Hertfordshire, HP4 2BG (GB); Royle, Michael, Hertfordshire, CM21 9HA (GB)
(74) Representative: Beck, Simon Antony

(57) **Abstract**

A rotor is provided in which a lamination stack is held in a compressed state between a fixed endplate 36 and a movable end plate 40 which is urged towards the fixed end plate by a constant force spring 50.

## Description

Switched reluctance electrical machines offer the possibility of high reliability when compared to conventional electrical machines because there are no electrical contacts with the rotor.

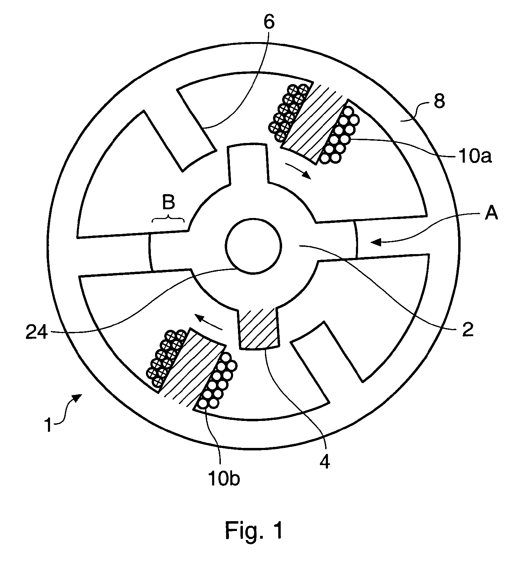

As shown in Figure 1, a switched reluctance machine 1 comprises a rotor 2 carrying a plurality of salient poles 4 thereon. A co-operating plurality of salient poles 6 provided on a stator 8 carry respective windings 10a, 10b and so on. For convenience the windings are often arranged in diametrically opposite pairs. From this description it will be seen that the rotor is in essence merely a rotating mass of metal which does not carry any windings or magnets or have electrical connections made thereto. It is this feature which allows a switched reluctance machine to work reliably at relatively high speeds and in hostile environments.

Switched reluctance generators are now being considered for use on aircraft because of this inherently reliable construction. Within aeronautical systems space and weight are inevitably constrained. Thus in order to meet the space, weight and power output targets it has been proposed to run the switched reluctance machine at rotor speeds far in excess of the generally accepted operating ranges. To put this in context, switched reluctance machines are often operated in the 3000 to 6000 rpm range, however within the aeronautical environment, maximum rotor speeds of 24000 to 30000 rpm are proposed to save weight and space.

US 6,122,817 discloses a laminated rotor which is clamped between two end flanges which are held by a centrally located nut in order to keep the lamination stack under pressure. A criticism of this design is that the clamping force is applied to the lamination pack at a point close to the axis of the rotor. Although the clamp plates 20 extend to the full diameter of the laminations, there will still be a tendency for the clamping forces to diminish rapidly with the increasing radius. Furthermore, thermal effects may be important since the material of the rotor shaft is almost inevitably going to be different to the material used to form the rotor laminations as this will be selected for its electrical and magnetic properties, whereas the material for the rotor shaft is selected for its structural properties.

US 4,977,344 discloses a rotor assembly for a machine intended to run as high as 6000 rpm. The lamination stack is held between end clamps which are made of non-magnetic stainless steel or cast from aluminium. The end clamps, as shown in

Figure 5 and 5a comprise an outermost portion from which three feet extend in order to abut the teeth of the rotor laminations so as to apply pressure to the stack of laminations. The feet extend down below the bodies of the end clamps so that the pressure exerted on the clamps is transmitted to the rotor lamination stack. The end clamps are described as only needing to be elastic enough to ensure that sufficient axial pressure on the rotor laminations is provided at all rotor temperatures and conditions. A criticism of this design is that while it may be feasible to ensure that the clamp arrangement shown exerts sufficient pressure within the operating speed range of 0 to 6000 rpm and within the context of a rotor for an air compressor, the greater rotational range required for higher speed aeronautical applications means that the compressive force needs to be large, but also needs to be well controlled since the material of the lamination stack itself is often relatively soft and too great a compressive force will degrade it, possibly causing distortion of the lamination stack or degradation of electrical performance. Furthermore, in applications where it is intended that the generator should be included in a rear cone section of an aeronautical engine in order that it can pick up drive from the low speed spool of a gas turbine engine, then it will be appreciated that the temperature range experienced by such a generator is likely to greatly exceed that experienced by the air cooling compressor described in US 4,977,344.

US 6,215,212 discloses a shaftless rotor where a lamination stack is held between two end clamps which are held in compression by a tie bolt. A criticism of this design is that it is not apparent how the compressive force can be reliably set, or indeed maintained over the operating range of the electrical machine.

It is important to appreciate that, for good electrical performance, the laminations have to be thin and that the volume of non-magnetic material interposed between the laminations needs to be reduced or eliminated. For this reason, the laminations typically have a thickness of 0.15 mm or less. This makes them relatively weak and prone to deform at high rotational speeds. Some of these issues have been addressed by an earlier patent, US 6,614,142 in the name of Goodrich Control Systems Limited wherein the lamination stack is held in compression by bolts disposed within a large radius, but where some of the laminations have lugs extending therefrom in order to hold the bolts against radial deformation.

According to a first aspect of the present invention there is provided a rotor for a switched reluctance electrical machine, the rotor comprising a rotor shaft, a plurality of rotor laminations, first and second end plates, and resilient compression means, wherein the rotor laminations are positioned between the first and second end plates, and at least the first end plate is movable with respect to the rotor shaft and is urged by the resilient compression means towards the second end plate so as to compress the rotor laminations, and wherein the resilient compression means compensates for thermal expansion and contraction so as to maintain the compressive force acting on the rotor laminations within a predetermined force range over the operating temperature range of the rotor.

It is thus possible to provide a rotor in which a relatively large clamping force can be applied to the rotor laminations in order to hold them rigid to allow operation at high rotational rates, and wherein compensation for thermal expansion via the use of the resilient compression means reduces or eliminates the risk of damage to the laminations due to excessive clamping force.

Preferably the compression means engages with the first end plate at a position of large or increased radius compared to the radius of the rotor shaft. This means that the clamping action effectively simulates a cylinder having a radius which is greater than that of the rotor shaft and hence creates a more rigid structure compared to a lamination stack clamped with the same clamping force but at a reduced radius. It will also be appreciated that the circumference of a circle increases with increasing radius and that given the maximum pressure that can be applied to any given surface area of the lamination stack is limited by the structural properties of the stack, then applying the bulk of the clamping force at enlarged radius means that the overall clamping force that could be applied is also increased because the force is spread over a larger area.

Preferably the first end plate is in sliding engagement with an outer diameter of the rotor shaft. This allows the first end plate to be held coaxial with the rotor shaft, whilst permitting longitudinal motion with respect to the axis of the rotor shaft.

Preferably the second end plate is rigidly secured to or integrally formed with the rotor shaft, or engages with a retaining structure that is rigidly secured to or integrally formed with the rotor shaft. Thus the position of the second end plate is well defined.

Preferably at least one and most preferably both of the end plates are in the form of circular flanges having peripheral portions of enhanced thickness. Preferably the interface region between a main body of the end plate and its thickened peripheral portion defines a shoulder for engagement with the compression means or the retaining structure.

Advantageously the first and second end plates act to provide relatively even (uniform) compression on the lamination stack whilst preventing damage to individual rotor laminations. The end plates themselves are preferably sufficiently rigid that they do not deform in use, and thereby prevent any bowing of the lamination stack or flaring of its edges.

In a preferred embodiment the surfaces of the first and second end plates facing towards the lamination stack are planar. However, in an alternative configuration the plates may bow in slightly in order to ensure that the compressive force is at its maximum at a distance remote from the surface of the rotor shaft, and preferably acting over a relatively wide band encompassing the poles 4 of the salient rotor, as generally indicated by a band B shown in Figure 1.

Preferably the compression means comprises a dished spring. Advantageously the force versus deformation characteristic of the spring is well characterised such that a measurement of the axial extent of the spring gives a reliable indication of the force being exerted by the spring. Advantageously the spring characteristic includes a region over which the spring functions as a substantially "constant force" spring such that compressive force remains substantially invariant over this region. Preferably the compression means is held in engagement between the shoulder of the first plate and a retaining and adjustment device.

In a preferred embodiment one of the end plates abuts a retaining structure which itself can be deformed slightly. Thus the retaining structure may be in the form of a conical wall, with an end portion of the wall arranged to abut the end plate at a region of increased radius. The conical wall may be associated with a stop formed on the shaft. Thus, as the lamination stack is compressed, the conical wall is deformed until such time as the end plate abuts the stop. This ensures an even distribution of compressive load around the lamination stack.

Preferably the retaining and adjustment device comprises a nut or other engagement element which can be moved axially along the rotor shaft so as to place the compression means into a predetermined compressed state, and locked in position such that the compressive force remains well defined. A nut in threaded engagement with the rotor shaft represents a preferred embodiment of such an adjusting mechanism. Preferably at least one washer is interposed between the nut and the compression means in order to reduce, and preferably substantially eliminate, torque transfer between the nut and the compression means. It is important to ensure that little or no torque acts on the lamination stack as this might otherwise cause the stack to become skewed thereby leading to a degradation in the electrical and physical performance of the rotor.

Preferably the nut is plated to provide lubrication during assembly. Preferably the plating is silver.

Advantageously the at least one washer is in the form of a precision ground hardened steel washer so as to minimise torque transfer to the lamination pack.

According to a second aspect of the present invention there is provided a switched reluctance machine having a rotor in accordance with the first aspect of the present invention.

The present invention will further be described, by way of example only, with reference to the accompanying drawings, in which:
Figure 1 is a schematic cross section perpendicular to the axis of rotation of the rotor of a switched reluctance generator;
Figure 2 is a cross sectional view along the axis of a rotor constituting an embodiment of the present invention;
Figure 3 is a cutaway perspective view of the rotor shown in Figure 2; and

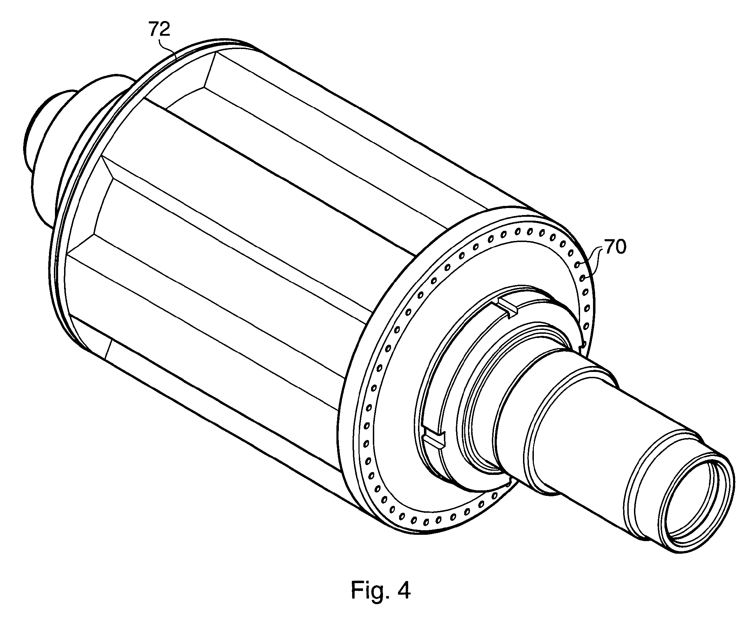

Figure 4 shows a perspective view of the assembled rotor.

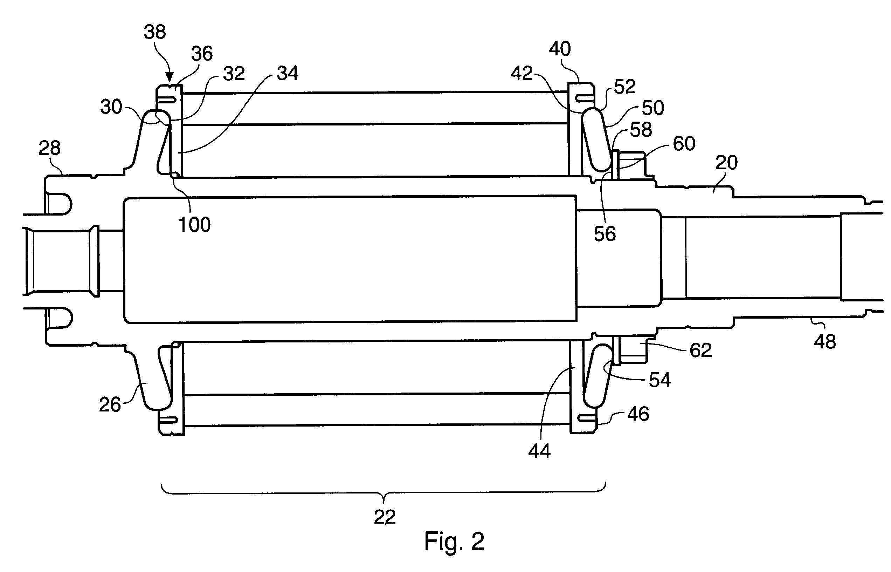

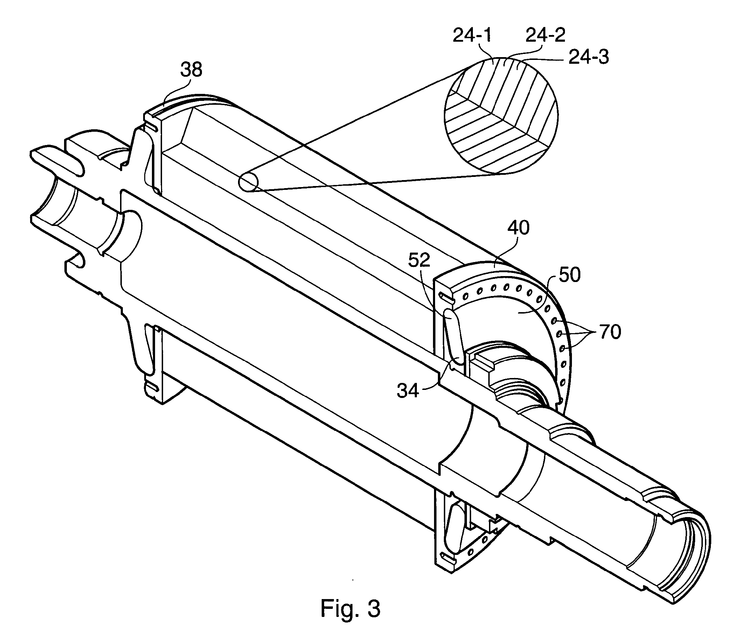

The rotor generally indicated in Figure 2 comprises a rotor shaft 20 which has a region 22 of constant radius upon which a plurality of rotor laminations 24-1, 24-2, 24-3 to 24-N are held (Figure 3). The rotor laminations are identical or similar to the lamination 2 shown in Figure 1 in that the lamination has a centrally formed hole 24 which engages in an interference fit in the region 22 of the rotor shaft 20. A generally conical flange 26 is formed towards a first end 28 of the rotor 20 and oriented such that the distance of the flange 26 to the first end 28 increases with increasing radius. The flange 26 has a radiused region 30 which, in use, abuts a co-operating shoulder 32 formed at the interface between a central portion 34 and peripheral portion 36 of an end plate 38. A moveable end plate 40 also having a shoulder 42 formed in the interface region between a central portion 44 and peripheral portion 46 is disposed towards an end of the region 22 nearest the second end 48 of the rotor shaft 20.

The laminations are held in compression between the end plates 38 and 40. In order to hold the laminations in the compressed state, the end plate 40 makes a sliding interference fit with the rotor region 22 and is urged to move towards the end plate 38 by the action of a dished spring 50. The radially outermost surface 52 of the spring 50 engages with the shoulder 42 of the end plate 40. The rate of curvature of the shoulder 42 and its diameter from the axis of rotation of the shaft 20 are selected to match the equivalent dimensions of the spring 50 such that the spring 50 is held coaxial with the shaft 20. The radially innermost surface 54 of the spring 50 abuts a first surface 56 of a washer 58. A second surface 60 of the washer 58 abuts a lock nut 62 which is in screw threaded engagement with the rotor shaft 20. The conical flange 26 has a stop 100 associated with it. Prior to assembly of the rotor the shoulder 32 of the flange 26 overhangs the stop 100. The flange 26 is arranged to be deformed slightly during assembly of the rotor, and in particular during tightening of the nut 62 to place the lamination stack under compression. In a prototype of the invention the flange 26 was arranged to deform by 0.25 mm when the nut 62 is tightened. The displacement of the end plate 38 is limited by the stop 100 on the shaft.

During assembly, the end plate 38 is positioned over the rotor shaft 20 until it reaches the position shown in Figure 2. The lamination pack is then positioned around the rotor shaft. Given the fragility of the individual laminations, the lamination pack may be formed by laying the individual laminations against one another, over a centering mandrill, and then the pack is clamped with external clamps in order to give it rigidity. The pre-formed lamination pack is then positioned over the shaft 20 to locate it within the region 22. Then the end plate 40 is positioned over the end 48 of the shaft, as are the compression spring 50, the washer 58 and the nut 62. The nut is brought into threaded engagement with the shaft and is tightened to hand tight so that the spring 50 is held between the end plate 40 and the washer 58. The thickness of the spring is then measured, and the nut 62 is then tightened in order to give a predetermined spring deformation. In prototypes of the present invention, the spring deformation is set to 1.3 to 1.4 mm giving rise to a clamping force of 75 to 80 kN. Once the required clamping force has been set, the external clamps are then removed from the lamination pack. Although the external clamps give the lamination pack rigidity during the construction of the rotor, it is still desirable to ensure that no rotational forces are imparted during the tightening of the nut. It is also important to ensure that no rotational forces are stored within the spring 50. The use of the precision ground hardened steel washer 58 between the spring and the nut reduces friction between the nut and the spring thereby avoiding imposing a torque load on the lamination pack.

As noted hereinbefore the bulk of the clamping force transferred from the spring 52 or the abutment 30 (acting as a reaction abutment) to their associated end plates 40 and 38 occurs in the region of the shoulders 42 and 32. The shoulders are formed in the vicinity of the roots of the teeth of the salient pole rotor, thereby providing maximum clamping force at or adjacent a radius corresponding to the intersection between the pole regions 4 and the inter-pole regions of the rotor 2.

The rotor assembly has to work reliably over a wide temperature range, which may reasonably be expected to encompass the sort of low temperatures that might be endured by an aircraft stationary in a sub-zero environment whilst also having to survive being heated from exhaust gases from the engine. This expansion which typically is less than 1 mm, is accommodated by the dished spring which maintains a substantially constant loading over the expected expansion range of the rotor. Thus in a prototype, the nominal 77.5 kN clamping force was maintained within an acceptable range of 75 to 80 kN over an extended temperature range.

For electrical efficiency, the individual laminations are not bonded or welded together but are only held together by the clamping force, and are retained on the shaft 20 by a light interference fit which allows limited motion, for example resulting from thermal expansion, to occur between the shaft and the lamination pack without causing damage to the lamination pack.

As shown in Figures 3 an 4 drillings 70 or a groove 72 can be provided in the end plates so as to accept balancing weights so as to minimise out of balance forces at high operating speeds.

The nut 62 is processed, for example by silver plating, to provide a low friction effectively self lubricating surface so as to reduce torque transfer to the washer, and hence to the spring.

It is thus possible to provide a rotor assembly which is electrically efficient by virtue of the use of thin laminations, but where structural rigidity is maintained by virtue of clamping the lamination pack at a relatively large radius, for example in the vicinity of the teeth of the salient rotor, and where changes in clamping pressure due to thermal expansion are substantially eliminated by use of spring presssure. The provision of a substantially invariant clamping pressure over the nominal operating temperature range means that wide variations due to thermal expansion need no longer be catered for and consequently the clamping pressure can be set higher than would otherwise be the case resulting in a more rigid rotor assembly.

## Claims

1. A rotor for a switched reluctance electrical machine, the rotor comprising a rotor shaft (20), a plurality of rotor laminations (24-1, 24-2, 24-N), first and second end plates (40, 38), and resilient compression means (50), wherein the rotor laminations are positioned between the first and second end plates (40, 38), **characterised in that** at least the first end plate (40) is moveable with respect to the rotor shaft (20) and is urged by the resilient compression means towards the second end plate (38) so as to compress the rotor laminations, and wherein the resilient compression means compensates for thermal expansion and contraction so as to maintain the compressive force acting on the rotor laminations within a predetermined force range over an operating temperature range of the rotor.

2. A rotor as claimed in claim 1, **characterised in that** the compression means (50) engages with the first end plate at a radius which is greater than that of the rotor shaft.

3. A rotor as claimed in claim 1 or 2, **characterised in that** the first end plate (40) is in sliding engagement with an outer surface of the rotor shaft (20) so as to hold the first end plate substantially coaxial with respect to the rotor shaft.

4. A rotor as claimed in any of the preceding claims, **characterised in that** the position of the second end plate (38) on the rotor is well defined.

5. A rotor as claimed in any of the preceding claims, **characterised in that** at least one of the end plates are in the form of circular flanges having peripheral regions (36) of enhanced thickness.

6. A rotor as claimed in claim 5, **characterised in that** an interface region between a central portion (34) and the peripheral region (36) of at least one of the end plates defines a shoulder (32) for engagement with the compression means of a support structure that is secured to the rotor shaft.

7. A rotor as claimed in any of the preceding claims, **characterised in that**, in use, the first and second end plates provide a substantially uniform compression over their area of contact with the rotor laminations.

8. A rotor as claimed in any of the preceding claims, **characterised in that** the compression means comprises a dished spring.

9. A rotor as claimed in any one of the preceding claims, in which the compression means (50) is held in engagement between a shoulder of the first end plate (40) and a retaining and adjusting device (58, 62).

10. A rotor as claimed in any of the preceding claims, **characterised in that** the second end plate (38) abuts a retaining structure (26) which deforms so as to facilitate uniform distribution of the compressive load on the laminations.

11. A rotor as claimed in claim 9, **characterised in that** the retaining and adjustment device can be moved axially along the shaft to place the compression means into a predetermined compressed state and locked in position such that the compressive force remains well defined.

12. A rotor as claimed in claim 11, **characterised in that** the retaining and adjustment device comprises a nut (62) in threaded engagement with the rotor shaft and a washer (60) positioned between the nut (62) and the compression means (50) in order to reduce torque transfer between the nut (62) and the compression means (50).

13. A switched reluctance machine including a rotor as claimed in any of the preceding claims.
